# EUROPEAN PATENT APPLICATION

(11) **EP 1 293 932 A1**
(43) Date of publication of application: **19.03.2003**
(21) Application number: 02356163.2
(22) Date of filing: 28.08.2002
(51) Int. Cl.: G06T 5/00, G06T 7/00

(54) **Interactive selection of data in digital images**

(30) Priority: 12.09.2001 FR 0111765
(71) Applicant: EASTMAN KODAK COMPANY, Rochester, New York 14650 (US)
(72) Inventor: Dupont, Jean-Fabien, 71102 Chalon sur Saone Cédex (FR)
(74) Representative: Parent, Yves

(57) **Abstract**

The present invention is in the technological field of imaging and more specifically image analysis.

The present invention relates more particularly to an interactive process that lets a user select and validate partially or fully the result supplied by an automatic detection process of digital image data. The invention process enables to display on the display screen (2) of a terminal (1), one digitized original image (3), accompanied by a digital image (4) of the graphic representation of candidate zones (5), (6), (7), (8), (13) representative of candidate elements to be extracted from the original image (3). And thus, the user can select and validate the candidate zones (5), (6), (7), (8) or parts of candidate zones (6A) that he/she wishes to validate or invalidate.

The invention process is used advantageously to renovate images recorded on silver or magnetic supports. The conventional silver supports of these images are generally constituted of photographic film or paper.

## Description

The present invention is in the technological field of imaging and applies more specifically to image analysis. The present invention relates to an interactive process that lets a user select and validate partially or fully the result supplied by a detection process of digital image data. The invention process enables the interactive generation of label maps of digital images. The invention process can be used in various applications of image analysis, like for example image segmentation, monitoring objects or structures in series of digital images or again restoring digital images. Its application to restoring digital images enables good quality detection to be obtained, which is an essential condition for good restoration.

In the imaging field, the renovation or restoration of images recorded on conventional supports can be operated by processing a previously digitized version of these images. The conventional supports for these images are generally constituted by film, photographic paper or magnetic tape. The restoration of these images enables the recovery of the representation of the original image, which has become deteriorated for example, because of aging or other deterioration caused during processing or handling of the photographic, film or magnetic supports. The images to be restored can be still or animated. Still images are generally photographs representing for example people, landscapes or photographs of prints (drawings, tables, etc.). Animated images are generally film sequences, for example cinema films or again video sequences, for example coming from televised documents or amateur video. Digital restoration processes known to those skilled in the art generally consist in digitizing the image originally recorded on a silver or magnetic film support, and then processing the digitized original image to restore it. The processing means and algorithms for these processes enable the digitized original image to be transformed according to instructions given by the programs deriving from these algorithms and programs. The digitized image thus transformed or restored can be memorized and used later in digital form or for example printed out on a film or photographic paper type support.

Among the image data diagnostic or detection techniques known to those skilled in the art and enabling later processing to be obtained suited to the target application, like for example the restoration of digitized images, there are image data detection processes that enable the detection and classification of image defects or anomalies. Such a process is described for example in European Patent Application EP 585759. This process enables determination of the quantity, form, size and location of impurities or scratches on the surface of a photographic element such as a filmstrip, digitized with a scanner. Based on set parameters, a detection algorithm enables the identification of points or zones of elements liable to represent structures or entities to be detected by the algorithm in the image or the plurality of digital images. These elements, called candidates, are a set of pixels forming zones called candidate zones. Candidate zones are zones where there is a potential risk or only a probability that there has been a change or a modification of the original image given the detection parameters of the algorithm used. The detection criteria and parameters are based for example on statistical formulations of assumptions enabling the establishment of acceptance thresholds, functions of similitude or resemblance among the image pixels, probability tests, image segmentation operations, etc. These detection processes automatically supply the result, for example in the form of the candidate zones of a digitized original image. The result of the implementation of these image detection processes is automatically supplied and said processes leave no freedom of interpretation to the user who has to validate the result of the detection supplied with no alternative, if he/she wants to restore an image for example. Users have no interaction or interactivity in relation to such processes. This means that a user, given the original image and the detection result supplied for said image, can only use this detection result in its entirety. The restoration will be based on the global result given by the detection process, without taking into account, on the one hand possible detection errors inherent to the detection algorithm used, and on the other hand the user's interpretation and specific needs, compared with the detection result supplied by said detection process.

It is the object of the present invention to provide a process that enables a user to be supplied with an image or digital map of labels representing the detection result of the image digital data. This label map can be modified interactively partially or fully and can then be exploited by various image analysis applications. This process of generating a label map and interactively modifying the label map is used in particular for the restoration of digitized images.

The object of the present invention is more specifically an interactive process of selection and validation of structures or entities (candidate elements) present in at least one digitized original image enabling a user of at least one terminal equipped with at least one display screen to validate or not in real time an automatic detection result of candidate elements of the original image and comprising the following steps:
a) automatic detection by a detection algorithm of candidate zones representative of candidate elements to be extracted from the original image;
b) automatic validation by the detection algorithm, of the detection of certain candidate zones performed in step a) and representing the candidate elements to be extracted from the original image;
c) recording of the shape, position and validation status of candidate zones and zones initially extracted and rejected during the detection;
d) display on the screen of the original image accompanied by a digital image of the graphic representation of the candidate zones translating the detection result of said original image obtained in steps a) and b);
e) visual analysis of the image of the graphic representation of the candidate zones by comparison with the original image simultaneously displayed on the screen;
f) from the visual analysis and the automatic validation result of step b), selection by the user of the candidate zones or parts of candidate zones that he/she wishes to validate or invalidate;
g) validation by the user of the selection made in step f).

Other characteristics will appear on reading the following description, with reference to the drawings of the various figures.

Figure 1 represents an example of a terminal and associated devices making up the invention's hardware environment.

Figure 2 represents an original image according to the invention.

Figure 3 represents an image of the graphic representation of the candidate zones in the original image.

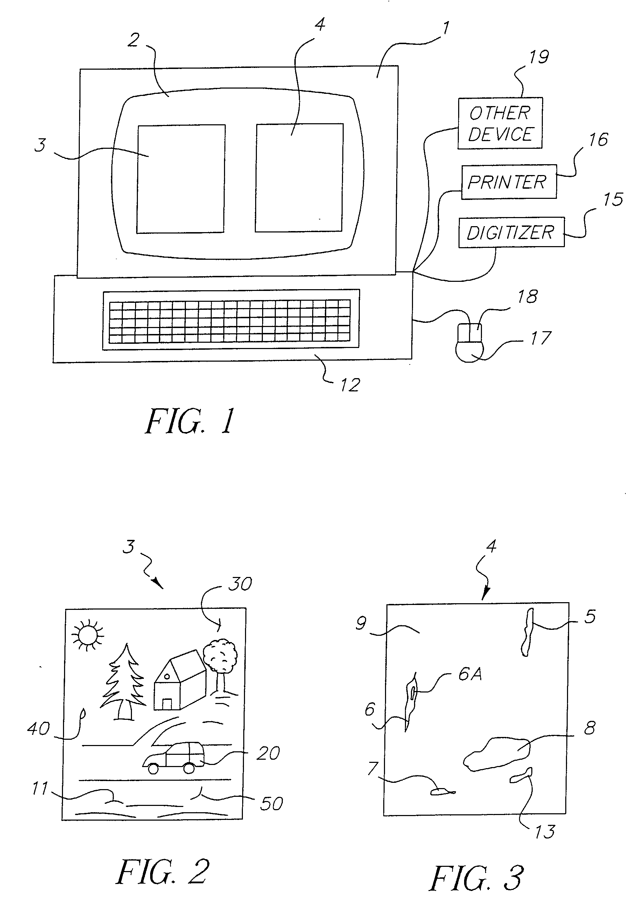

The following description is a detailed description of the main embodiments of the invention with reference to the drawings in which the same numerical references identify the same elements in each of the different figures. The present invention relates to a process enabling a user to validate, according to the needs he/she seeks, a detection result of digitized image data. According to Figures 1, 2 and 3, the invention process enables the user of a terminal 1 equipped with a display screen 2 to validate interactively a detection result of candidate zones 5, 6, 7, 8, and 13 of the digitized original image 3. The digitized original image 3 is either a unique image, or a subset of a series of images, or a set of independent images. The detection algorithm used can for example enable the isolation of zones in movement or local defects present in a digitized image or again extract certain geometric structures such as outlines (curves, lines, or points) or semantic elements like human faces or cars. Most detection processes can be simplified to two distinct steps applied in succession: a detection or extraction step of candidate elements liable to correspond to the entity to be detected (candidate zone) and a validation step applied to each of these candidate zones. This validation of candidate elements can be performed according to various criteria, like for example by means of statistical analysis, thresholding operations according to a criterion to be defined, generation of hypothesis tests, similarity functions, etc. The validation step corresponds to an automatic selection operated by the detection algorithm of validated candidate zones, invalidated candidate zones and zones initially extracted and rejected during detection. The display of candidate zones on screen 2 is codified and corresponds to different display colors, according to a status assigned to said candidate zones: validated, invalidated or rejected. For the same status, we can also envisage different codification levels: for example a first color indicating a candidate zone in movement and a second color indicating an overlarge zone. In this context, the detection process memorizes and enables the presentation to the user for example by a display on a screen 2, of the result of the validated candidate zones, the invalidated candidates zones and the zones initially extracted and rejected during detection. The zones initially extracted and rejected during detection comprise the background zone 9 of the image 4. A zone detected as candidate is labeled, i.e. each of the connected pixels representative of a candidate zone is assigned a unique value viewable on screen as a gray level or a color. This connectedness between pixels depends on a neighborhood system. The neighborhood system enables the definition of the number of pixels or points connected to a given pixel. For example we can choose as connected pixels, the four pixels closest to the given pixel forming a cross whose center is said given pixel, or for example the eight pixels closest to the given pixel and arranged around said given pixel. We can also not choose the pixel(s) connected to the given pixel, and thus label the candidate zone pixel by pixel. Label maps are known to those skilled in the art. A label is a numeric value assigned to a pixel or to a set of pixels of a digital image. For example, in Figure 2, all the pixels identifying an entity 20, for instance a car, will have the label "2". This entity 20 is for instance animated (in movement) in the said original image 3. Thus the label map contains for example a corresponding candidate zone 8, if the zone 8 satisfies the decision criteria of an entity to be detected. The graphic representations 5, 6, 7, 8, and 13 on the screen 2 of the label map (numeric values) are the candidate zones. The candidate zone comprises all the candidate pixels representing a zone of interest, extracted by the detection algorithm and having a special validation status. The candidate zone can represent a geometric structure but also for example can correspond to the zone having a set of homogeneous parameters estimated by the detection process. The parameters characterize for example a type of movement of an entity of an image sequence. The value of the label applied to a candidate zone and by extension the number of possible different candidate zones can depend on the memory space allocated to each of the pixels. For example, if a single byte is allocated per pixel, only 256 (2 to the power 8) distinct candidate zones can be detected. If each pixel is coded by means of three channels, for example for a color image, it will be possible to code and represent the candidate zone by one of 16 million (256 cubed) possible colors. A much higher number of distinct candidate zones is thus possible.

The means used to process, handle or analyze a digital image or a series of digital images are generally implemented in a hardware environment like that represented in Figure 1. A preferred embodiment of implementing the invention process comprises the use of a terminal 1. The terminal 1 used is for example a personal computer or PC comprising a screen 2 and a keyboard 12. The operating system of the terminal 1 is for example Unix, Windows or Linux. These operating systems enable the recognition via for example a USB system (Universal Serial Bus), of devices like a scanner or digitizer 15, a printer 16 linked to the PC 1 or any other device 19 linked to the PC 1 and enabling the capture of various video data. The user who wants to process, handle or analyze an image or a plurality of original images digitizes the image or plurality of original images by using for example a scanner 15, if the support of said original image is a film or photographic paper silver support. The transformed image is thus coded with digital data. The original image can also be a digital image recorded with a digital camera or camcorder; such an image can then be unloaded into the terminal 1 and be the subject of processing, handling or analysis if the user wishes. The digitized original image 3 is then recorded or stored in a memory of the terminal 1. In a preferential embodiment, the invention process enables the user to launch the automatic detection operation of candidate zones 5, 6, 7, 8, and 13 of the digital original image 3, as represented in Figure 3. This for example as part of the restoration of said image 3. The launch of the detection processing 15 is operated automatically for example using a simple command on the keyboard 12 of the terminal 1 or again by selecting the processing using the mouse 17 if a user interface is associated with the detection process. Memorization of the result of the detection of data in the original image is performed automatically. The detection algorithm enables the automatic supply of all the validated and invalidated candidate zones, each candidate zone representing the zone or part of the original image 3 where the zones of interest in the image are. These zones of interest depend on the chosen detection and validation criteria, proper to the detection algorithm. The candidate zones are detected for each pixel of the original image 3 in the special embodiment of the invention process applied to the restoration of digitized images; the zones of interest correspond for example to local potential defects in the original image. These local defects are alterations or foreign elements of the original image 3 that correspond in the image 4 to the candidate pixels detected from the original image 3. Examples of these local defects of the image are dust, scratches or deterioration of the initial silver support of the image; these defects are created for example during handling or during the development of said support.

From a digitized original image, the invention process enables the user to operate rapidly and easily the interactive validation of the detection result of the original image. The invention process enables the remedy of imperfections of the detection algorithm that by design do not guarantee a perfect result and which strongly depend on the choice by an operator of suitable values of parameters relating to the detection process. However reliable these detection algorithms are, they are still by design based on acceptance threshold criteria and statistical confidence levels. This means that the candidate zones are reliable with a certain level of confidence that can be less than 100%. Therefore it is important to remedy this lack of robustness of the detection algorithms by enabling user interactivity. Interactivity is an essential feature of the invention process. Interactivity is operated simply by enabling the user to modify instantly, in real time, the detection result so that it suits his/her need. From the visual analysis of the image and the result of the automatic validation, the user selects the candidate zones or parts of candidate zones that he/she then wants to validate or invalidate, so as to obtain a validation status and graphic representation of said zones consistent with the result sought. Modification is operated through an interface, for example the mouse 17 connected to the terminal 1. The mouse 17 thus enables the user to select the candidate zones whose validation status supplied by the detection algorithm he/she wants to modify. The validation status corresponds to the result (validated, invalidated) automatically supplied by the detection algorithm. Selection and validation are operated simply by clicking for example on the specific button 18 of the mouse 17, the screen cursor or pointer being placed on the candidate zone to be validated displayed on said screen. Validation can also be operated by selecting and validating, by the action of a specific button of the mouse 17, several candidate zones. The candidate zones are validated either one by one, or altogether by defining a region (with the mouse) encircling several candidate zones. The invention process also advantageously enables improved interactivity by only validating a candidate zone partially. This generally applies to fairly extended candidate zones, i.e. comprising a fairly high number of pixels. For one candidate zone 6, detected and considered for validation (or invalidation) by the detection algorithm, the user may want to only validate (or invalidate) a part of the candidate zone 6. In this case he/she selects the outline of a subset or a part 6A of said candidate zone 6 that he/she wishes to validate (or invalidate), with a mouse button 17. This selection can be refined after having for example made an enlargement (zoom) of said zone on the screen. Then, the user validates (or invalidates) the selected part 6A of the candidate zone 6. The user may wish to select for example only part or all of a candidate zone of an image, to take account of the level of hue or saturation (white in the image) of the pixels of said image. According to Figure 1, the invention process enables the simultaneous display on the screen 2 of the digitized original image 3 automatically accompanied by the digital image 4 of the graphic representation of the candidate zones detected in the original image 3. We can also in a variant of this embodiment, display in succession on the screen 2, the image 3 and then the image 4. We can also, in an embodiment not illustrated, advantageously use two screens instead of one; this can be done by using for example two linked PCs, placed side by side. The original image 3 can thus be displayed on one of the screens and the image 4 of the graphic representation of the candidate zones is displayed on the other screen; the images 3 and 4 can be displayed simultaneously or alternately on the two screens. The detection algorithm used can for example detect alterations or deterioration of the image, movements in the image (e.g. if they are film images), entities or structures of the image like for example human faces, special geometrical structures, cars, etc. The detection of these singular shapes or movements or entities composing a still image or a series of animated images enables the automatic creation of the image 4 of the candidate zones. Figure 2 represents for example an original image 3 of a landscape and Figure 3 represents the image 4 of the graphic representation of the detected candidate zones. After the automatic detection and validation steps, the images 3 and 4 are recorded for example in a digital file of a memory of the terminal 1. The user can thus use the result in real time as soon as it is supplied; he/she can for example pass on to the steps of displaying the images and the visual analysis of said images. In an advantageous embodiment, the invention process enables the visual analysis to be enriched by simultaneously animating on the screen 2 the digitized original image 3 and the digital image 4 of the graphic representation of the candidate zones, when the original image is a subset of an animated sequence representing a continuous run of successive events. To enable visual analysis by the user on the screen 2, the detected candidate zones 5, 6, 7, 8, and 13 have numerical codification of colors or gray levels that can be easily differentiated; the candidate zones 5, 6, 7, 8, and 13 differentiating themselves easily from the background color 9 of the image 4. The different colors of the validated candidate zones on the one hand and the invalidated candidate zones on the other hand are differentiated themselves from the background colors 9 of the image 4. In a preferred embodiment, the background 9 of the image 4 has for example a dark or black color, while the candidate zones validated by the detection algorithm are for example 5, 6, and 7 and represented by a green color, while the non-validated or invalidated candidate zones are for example 8 and 13 and represented by a red color. The invention process enables the display on the screen 2 of the terminal 1 of the two images 3 and 4 simultaneously, so that the user visually analyses the two images 3 and 4 by comparison.

According to Figures 2 and 3, the user can for example compare four candidate zones 5, 6, 7, and 8 with what he/she sees on the original image 3. The user considers for example that the candidate zones 5 and 6 correspond effectively to the defects 30 and 40 visually identified in the original image 3. However, he/she considers that the candidate zone 7 which should be validated according to the supplied detection result, is in fact considered not as a defect of the image 3, but as a feature of the image, for example a hole or an object 11 placed on a road represented in the image 3. The invention process enables the user to not validate the detection result, initially validated by the detection algorithm. The fact that the candidate zone 7 is detected and validated is due to a lack of reliability of the algorithm in relation to the original image 3. In practice, these user validations are operated by a simple command by using for example the mouse 17 of the terminal 1. The candidate zone 13 initially invalidated by the detection algorithm represents for example for the user a real local defect 50 in the image 3. The invention process enables the user to select and validate the candidate zone 13 manually. These manual selections and validations are performed simply with a mouse button 17 or a key on the keyboard 12 of the terminal 1. This represents the interactivity of the invention process in relation to the visual analysis made by the user. The user can thus easily and rapidly palliate for a lack of efficiency or robustness of the detection process of structures or entities of digital images. The invention process thus enables obtaining almost in real time a detection result matching the user's wishes. A candidate zone having been wrongly invalidated (or validated) by the detection algorithm can be immediately validated (or invalidated) interactively by simple selection of said candidate zone using the mouse 17 or the keyboard 12 of the terminal 1. The position, membership and validation status of the pixels forming a candidate zone are recorded in a memory of the terminal 1. The validation status is shown visually by the various colors of the candidate zones appearing on the screen 2. The invention process enables by simple selection of a candidate zone, the application to all the pixels of said zone, the color or gray level corresponding to the new status wanted by the user. When the image is restored to the user's preference, it can for example be memorized or stored in a digital file of the terminal 1, it can also be printed onto a paper support by using for example a printer 16 connected to the terminal 1.

While the invention has been described with reference to the preferred embodiments, it is apparent that the present application covers all the modifications or variants that can be produced and correspond with the object of the invention. Therefore, the present embodiments are illustrative and not restrictive in relation to the claimed protection.

## Claims

1. Interactive selection and validation process of structures or entities present in at least one digitized original image (3) enabling a user of at least one terminal (1) equipped with at least one display screen (2) to validate or not in real time an automatic detection result of candidate elements of the original image and comprising the following steps:
a) automatic detection by a detection algorithm of candidate zones (5, 6, 7, 8, and 13) representative of candidate elements to be extracted from the original image;
b) automatic validation by the detection algorithm, of the detection of certain candidate zones (5, 6, 7, 8, and 13) performed in step a) and representing the candidate elements to be extracted from the original image;
c) recording of the shape, position and validation status of candidate zones (5, 6, 7, 8, and 13) and zones initially extracted and rejected (9) during the detection;
d) display on the screen (2) of the original image (3) accompanied by a digital image (4) of the graphic representation of the candidate zones (5, 6, 7, 8, and 13) translating the detection result of said original image obtained in steps a) and b);
e) visual analysis of the image (4) of the graphic representation of the candidate zones by comparison with the original image (3) simultaneously displayed on the screen (2);
f) from the visual analysis and the automatic validation result of step b), selection by the user of the candidate zones (5, 6, 7, and 8) or parts of candidate zones (6A) that he/she wishes to validate or invalidate;
g) validation by the user of the selection made in step f).

2. A process, according to Claim 1, wherein the digital codification of colors enable the user to differentiate on the screen (2) by different gray levels or colors, each of the graphic representations of the validated or invalidated candidate zones; said gray levels or colors of the different graphic representations of the candidate zones being themselves differentiated from the background color (9) of the image (4).

3. A process, according to Claims 1 and 2, wherein the visual analysis is enriched by simultaneously animating on the screen (2) the original image (3) and the image (4) of the graphic representation of the candidate zones, when the original image comprises an animated sequence representing a continuous run of successive events based on the animation of at least one entity (20) of said original image (3).

4. A process, according to any one of the previous claims, wherein the graphic representation of the candidate zones can be interactively modified by action on the keyboard (12) or the mouse (17) of the terminal (1).

5. A process, according to any one of the previous claims, wherein the local defects of the image detected in the original image are dust, scratches or deterioration of the silver support of said original image.
